# EUROPÄISCHE PATENTSCHRIFT

(11) **EP 0 586 842 B1**
(45) Veröffentlichungstag und Bekanntmachung des Hinweises auf die Patenterteilung: **12.02.1997**
(21) Anmeldenummer: 93111621.4
(22) Anmeldetag: 21.07.1993
(51) Int. Cl.: B60R 7/00

(54) **Stauhilfe für den Innenraum von Kraftfahrzeugen**
Stowing appliance for the inside of a vehicle
Aide à l'arrimage pour l'intérieur d'un véhicule

(30) Priorität: 09.09.1992 DE 4230100
(43) Veröffentlichungstag der Anmeldung: 16.03.1994
(73) Patentinhaber: Ieper Industries N.V., B-8900 Ieper (BE)
(72) Erfinder: Labeur, Lucas, B-3010 Kessel-1o (BE)
(74) Vertreter: Weber, Dieter, Dr.

(56) Entgegenhaltungen:
- EP-A- 0 507 161
- DE-U- 9 107 683
- FR-A- 2 591 164
- US-A- 2 573 102
- US-A- 3 333 890
- US-A- 4 483 471

## Beschreibung

Die vorliegende Erfindung betrifft eine Stauhilfe mit elastischen Spannelementen für den Innenraum von Kraftfahrzeugen, mit Eckteilen, die ein Polygon aufspannen und durch im normalen Gebrauch starre Verbindungselemente miteinander verbunden sind, wobei sich mindestens von einigen der Eckteile aus elastische Spannelemente erstrecken und mit je einem dieser sich von diesem Eckteil wegerstreckenden Spannelemente an einer Wand im Inneren des Fahrzeuges befestigbar sind.

Die US-A-2.573,102 zeigt eine Stauhilfe mit den vorgenannten Merkmalen, die konkret aus einem starren, im wesentlichen rechteckigen Rahmen besteht, von welchem einige Eckteile über Federn, also über elastische Spannelemente, an einer Wand des Fahrzeuges, konkret am Innenren eines Kofferraumdeckels, befestigbar sind. Die FR-A-2 591 164 zeigt eine ähnliche Vorrichtung, die im Inneren eines Fahrzeuges an dessen Dach angebracht ist. In beiden Fallen erstrecken sich die elastischen Spannelemente bzw. Spiralfedern ausschließlich von den Eckteilen bzw. auch von einem Seitenabschnitt eines Rahmens zu den entsprechenden Befestigungsstellen im Innenraum eines Fahrzeuges. Dies hat zum einen zur Folge, daß wegen der Lange der Federn, die unvermeidlich eine gewisse Mindestlänge haben müssen, damit sie auch einen elastischen Dehnungsweg bereitstellen, der Rahmen bzw. die Eckteile nicht vollständig in dichte Anlage an die Fahrzeugwand gebracht werden können. Zum anderen wird durch die relativ kurzen Federn das Verstauen größerer Gegenstände erschwert, weil in dem Fall nämlich die Federn relativ stark gedehnt werden müssen, was einen entsprechenden Kraftaufwand erfordert und anschließend auch die verstauten Gegenstände unter größeren Druck setzt als dies zum Halten notwendig wäre. Die US-A-3,333,890 zeigt eine Stauhilfe, die in Rohren und auf den Innenraum der Rohre aufgenommene Spannseile aufweist.

Darüberhinaus sind in Kraftfahrzeugen verschiedene Arten von Stauhilfen bekannt, die dazu dienen, je nach Größe der Stauhilfe kleinere oder größere Teile platzsparend und sicher gehalten zu verstauen. Hierzu zahlen z.B. Handschuhfächer, Seitenfächer, Klappen in Seitenwänden und Bodenteilen etc. Weiterhin sind auch Haltenetze bekannt, die mit Eckpunkten oder Rahmen an der Fahrzeuginnenwand, d.h. entweder an den Türverkleidungen, den Wandverkleidungen oder aber an Rücksitzverkleidungen oder sonstigen Wandelementen im Inneren des Fahrzeuges befestigt sind. Einfache Beispiele sind auch an den Innenverkleidungen des Fahrzeuges angenahte Taschen, die einen Gummizug aufweisen.

Die zuletzt genannten Stauhilfen zum Verstauen von Gegenständen in Fahrzeugen haben entweder den Nachteil, daß sie starr sind, wie z.B. Handschuhfächer, so daß Gegenstände darin umherrollen oder verrutschen können, wenn sich das Fahrzeug beschleunigt bewegt, d.h. entweder beim Anfahren, Bremsen oder bei Kurvenfahrten, oder aber sie sind relativ knapp bemessen, wie z.B. die aufgenähten Taschen oder Netzfächer, in denen nur kleinere Gegenstände untergebracht werden können. Insbesondere besteht in manchen Fahrzeugen der Bedarf, auch größere Gegenstände wie z.B. Erste-Hilfe-Kästen, Warndreiecke, Bordwerkzeug etc. platzsparend und dennoch unverrutschbar gehalten unterzubringen.

Der vorliegenden Erfindung liegt gegenüber dem bekannten Stand der Technik daher die Aufgabe zugrunde, eine Stauhilfe zu schaffen, welche einerseits im leeren Zustand wenig Platz beansprucht, dabei fest an einer Fahrzeuginnenwand anliegt und nur ein geringes Totvolumen aufweist, andererseits in ihrem Aufnahmevolumen aber auch stark veränderbar ist und gegebenenfalls auch größere Gegenstände aufnehmen und sicher und im wesentlichen unverrutschbar festhalten kann, ohne diese übermäßig großen Haltekräften auszusetzen.

Diese Aufgabe wird dadurch gelöst, daß die Spannelemente als Spannseile ausgebildet sind, die sich von jeweils einer ihrer Befestigungsstellen an einer Wand im Inneren des Fahrzeuges jeweils durch ein zugehöriges Eckteil hindurch und mindestens bis zu einem weiteren Eckteil und durch dieses hindurch zu einer anderen der Befestigungsstellen erstrecken.

Hierdurch wird gewahrleistet, daß das elastische Spannelement selbst relativ lang wird, indem es sich nämlich von einer Befestigungsstelle zunächst zu einem Eckpunkt der Stauhilfe, dann entlang des betreffenden Rahmens oder dergleichen bis zu einem weiteren Eckpunkt und von dort wieder zu einer anderen Befestigungsstelle erstreckt. Dadurch wird der zur Verfügung stehende Dehnungsweg beträchtlich vergrößert, die Stauhilfe kann also unter Dehnung des Spannelementes um einen wesentlich größeren Betrag von der Wand des Fahrzeuges weggezogen werden, als dies bei einem erheblich kürzeren Spannelement gleicher Elastizität möglich wäre, und zwar ohne daß eine übermäßige Kraft aufgewendet werden muß. Gleichzeitig kann dabei sichergestellt werden, daß auch in dem vollständig an die Wand des Fahrzeuges herangezogenen Zustandes der Stauhilfe das elastische Spannelement bzw. Spannseil immer noch eine gewisse Restspannung aufweist, um die Stauhilfe fest in Anlage an der Wand zu halten.

Im einfachsten Fall spannen die Eckteile mit den Verbindungselementen zusammen einen Rahmen auf. Die Verbindungselemente müssen aber nicht notwendigerweise einzelne Rahmenteile wie Stangen oder dergleichen sein, sondern es kann sich dabei auch um größere Platten handeln, und insbesondere können alle Verbindungselemente z.B. in Form einer größeren Platte auch miteinander verbunden sein und/oder die Eckteile in allen Richtungen überragen, wobei der Begriff "Eckteile" sich hier lediglich auf das aufgespannte Polygon bezieht, also Teile bezeichnet, die zusammen ein Polygon aufspannen, wenn man sie durch entsprechende Linien verbindet und die allein dadurch definiert sind, daß sich von ihnen aus die Spannelemente erstrecken. Im einfachsten Fall würde also auch eine Platte mit vier in einem Rechteck angeordneten Bohrungen, in welchen entsprechende Spannelemente befestigt sind, eine solche Definition erfüllen, ohne daß es darauf ankommt, daß die Bohrungen genau in den Eckbereichen der Platte angeordnet sind. Es versteht sich, daß die Spannelemente aufgrund ihrer Elastizität und Länge die Eckteile und damit auch die Verbindungselemente jeweils an die Wand heranziehen, an der die Spannelemente befestigt sind. Im leeren Zustand sollte also die Stauhilfe, die vorzugsweise im wesentlichen eben ist, dicht an die Wand herangezogen werden, an welcher sie befestigt ist. Dabei kann die Stauhilfe insbesondere auch einem etwa gekrümmten Verlauf dieser Wand angepaßt sein, sie kann sich jedoch auch im mittleren Bereich etwas vorwölben, um gegenüber der zugehörigen Wand einen entsprechenden Hohlraum zu definieren. Auch Bedienungselemente, wie z.B. Handgriffe oder dergleichen, können von der Stauhilfe vorstehen. "Im normalen Gebrauch starr" bedeutet für die Verbindungselemente im vorliegenden Fall, daß sie zwar in ihrer Länge variierbar sein und auch als abgewinkelte Teile vorliegen können, eine eingestellte Länge oder ein eingestellter Winkel jedoch während des normalen Gebrauchs der Stauhilfe unverändert bleiben.

Die erfindungsgemäße Stauhilfe hat den Vorteil, daß sie, wie bereits erwähnt, im leeren Zustand dicht an der Wand des Fahrzeuges anliegt, an welcher sie angebracht ist, daß sie aber gleichzeitig wegen der Elastizität und Länge der Spannelemente relativ weit von dieser Wand abgezogen werden kann, so daß sowohl kleine als auch große Gegenstände zwischen der Wand und der Stauhilfe angeordnet werden können und nach dem Freigeben der Stauhilfe durch die elastischen Spannelemente zwischen der Stauhilfe und der zugehörigen Wand eingeklemmt und gehalten werden. Zu diesem Zweck kann die Stauhilfe mehr oder weniger plattenförmig, oder aber auch als Rahmen ausgebildet sein, der gegebenenfalls zur Erfassung kleinerer Teile mit einem Netz bespannt oder mit einem Gitter ausgekleidet sein kann. Der Rahmen, eine Platte oder ein Gitter können auch über die Eckteile (zur Außenseite des Polygons hin) hinausragen.

In der bevorzugten Ausführungsform der Erfindung sind die Eckteile getrennt von den Verbindungselementen herstellbar und sind mit den Verbindungselementen fest verbunden. Dies dient vor allem einer einfachen und leichten Herstellung einer entsprechenden Stauhilfe. Zweckmäßigerweise sind die Eckteile auch lösbar mit den Verbindungselementen verbunden, so daß die betreffenden Teile sowohl zu Reparaturzwecken ausgetauscht werden können, vor allem aber auch kleinere Verbindungselemente gegen größere ausgetauscht werden können und umgekehrt, so daß die Stauhilfe je nach Bedarf auch eine unterschiedliche Größe annehmen kann, wobei verschieden große Stauhilfen dennoch gleiche Eckteile aufweisen, was den Fertigungsaufwand verringert.

In der bevorzugten Ausführungsform verlaufen die elastischen Spannelemente von einer Befestigungsstelle an der Innenwand eines Kraftfahrzeuges durch das betreffende, unmittelbar gegenüberliegende Eckteil hindurch und bis zu einem diagonal zu dem erstgenannten Eckteil gelegenen weiteren Eckteil. Durch diese Ausgestaltung wird das elastische Spannelement selbst noch länger, so daß auch der zur Verfügung stehende Dehnungsweg entsprechend vergrößert wird, die Stauhilfe also unter Dehnung des Spannelementes um einen noch wesentlich größeren Betrag von der Wand des Fahrzeuges weggezogen werden kann, als dies bei einem erheblich kürzeren Spannelement gleicher Elastizität möglich wäre.

In der bevorzugten Ausführungsform der Erfindung sind die Verbindungselemente in Längsrichtung verstellbar, so daß der von den Verbindungselementen und den Eckteilen aufgespannte Rahmen vergrößert und verfeinert werden kann.

Zweckmäßig ist es auch, wenn die freien Enden der Spannelemente jeweils mit einem Befestigungsteil versehen sind.

Dabei ist erfindungsgemäß vorgesehen, daß an der Innenwand des Fahrzeuges Halteelemente für die Aufnahme von Teilen der Spannelemente, insbesondere für die Aufnahme der Befestigungsenden, befestigbar sind.

Bevorzugt ist dabei eine Ausführungsform der Erfindung, bei welcher die Spannelemente an ihren Enden jeweils einen, vorzugsweise pilzförmigen, Kopf als Befestigungselement aufweisen, der in einem entsprechenden Halteelement sicher festgehalten werden kann. Zweckmäßigerweise hat ein solches Halteelement die Form eines Langloches mit einer Erweiterung, wobei der (pilzförmige) Kopf zwar durch die Erweiterung, nicht jedoch durch den schmaleren Bereich des Langloches hindurchpaßt, so daß er durch die Erweiterung hindurchgeführt und dann unterhalb der pilzförmigen Verdickung in den schmaleren Langlochbereich eingeführt werden kann. Dabei ist neben dem Rand des schmaleren Langlochbereichs vorzugsweise auf der Innenseite des Halteelementes eine Vertiefung vorgesehen, in welcher der pilzförmige Kopf aufnehmbar ist, so daß im gespannten Zustand der pilzförmige Kopf nicht in den Erweiterungsbereich zurückgeschoben werden kann.

Weiterhin ist eine Ausführungsform der Erfindung bevorzugt, bei welcher die Eckteile Führungslöcher für die Hindurchführung der Spannelemente aufweisen. Die Spannelemente sind in der bevorzugten Ausführungsform elastische Seile. Zweckmäßigerweise spannen drei Eckteile mindestens ein Dreieck, vorzugsweise jedoch ein Viereck auf, wobei die vier Eckteile vorzugsweise einen rechteckigen Rahmen aufspannen und die Verbindungselemente zwischen den Eckteilen Rundstäbe oder -rohre sind. Auch trapezförmige Rahmen können in KFZ durchaus zweckmäßig sein.

Bevorzugt ist dabei eine Ausgestaltung der Erfindung, bei welcher ein im wesentlichen seilförmiges Spannelement mit einem Ende in einem der Halteelemente befestigt ist, durch das diesem Halteelement gegenüberliegende erste Eckteil bzw. dessen Bohrung hindurchgeführt ist, und dann zu dem diagonal hierzu liegenden Eckteil verläuft, von dort wiederum parallel entlang einer Seitenkante des Rechteckes zu einem weiteren Eckteil geführt ist und von dort schließlich zu dem verbleibenden Eckteil diagonal durch das Rechteck hindurch verläuft Durch dieses letzte Eckteil bzw. dessen Bohrung wird das Spannelement nunmehr hindurchgeführt und ist mit seinem zweiten freien Ende in dem dem letztgenannten Eckteil gegenüberliegenden Hafteelement verrastet. Aufdiese Weise sind zwei Eckteile über ein gemeinsames Spannelement, welches mehr oder weniger die Form eines Seiles hat, mit ihren jeweils gegenüberliegenden Halteelementen verbunden. Ein zweites Seil wird nunmehr in völlig analoger Weise von einem dritten Halteelement aus durch das gegenüberliegende der beiden verbleibenden freien Eckteile hindurchgeführt, verläuft von dort aus wiederum diagonal zu einem Eckelement, parallel entlang einer Seitenkante zu einem weiteren und wieder diagonal zu dem letzten freien Eckteil, um durch dieses hindurch und mit dem zweiten freien Ende des zweiten Spannelementes in dem Halteelement befestigt zu werden, welches dem letztgenannten Eckteil gegenüberliegt.

Auf diese Weise kann man die vier Ecken eines viereckigen bzw. rechteckigen Rahmens über zwei Seile mit den Halteelementen verbinden, wobei die über alle vier Ecken des Vierecks bzw. Rechtecks geführten elastischen Spannelemente insgesamt einen relativ großen Dehnungsweg haben, so daß die Stauhilfe unter Dehnung der elastischen Spannelemente relativ weit von der Wand eines Fahrzeuges abgehoben werden kann. Selbstverständlich sind auch alternative Ausgestaltungen denkbar, bei welchen beispielsweise entsprechende Seilabschnitte in den Eckteilen, oder aber in den Halteelementen gespeichert werden, so daß in diesem Fall ebenfalls entsprechend der Seillänge im Speicher ein relativ weites Abheben der Stauhilfe von der Innenwand des Fahrzeuges möglich wäre.

Die Eckteile selbst sind vorzugsweise im wesentlichen plattenförmig und weisen mindestens ein Durchgangsloch mit gut abgerundeten und geglätteten Kanten für die Hindurchführung der Spannelemente auf. Außerdem sind zwei benachbarte Kanten dieser plattenförmigen Eckteile in der bevorzugten Ausführungsform kreisförmig umgebördelt, so daß sie Verbindungselemente in der Form von Rundstäben oder -rohren leicht und sicher aufnehmen können. Wahlweise können entsprechende Aufnahmeteile jedoch auch als Nuten ausgebildet sein, insbesondere wenn die Eckteile nicht aus Blechen, sondern z.B. aus Gußteilen bestehen. Die Eckteile können im übrigen auch aus Kunststoff, z. B. im Spritzgußverfahren, gefertigt sein.

Zweckmäßig ist eine Ausführungsform der Erfindung, bei welcher mindestens ein Teil der Umlenkstellen für die Spannelemente in den Eckbereichen bzw. an den Eckteilen über Seilscheiben verlaufen, die eine Umlenkung und Führung der Spannelemente, vorzugsweise in Form von Spannseilen, mit sehr geringer Reibung erlauben.

Schließlich ist eine Ausführungsform der Erfindung bevorzugt, bei welcher zwei beabstandete, vorzugsweise in dem von den Eckteilen aufgespannten Polygonzug diametral gegenüberliegende Verbindungselemente durch einen Bügel miteinander verbunden sind, der auch als Griff dient, damit die Stauhilfe unter Auszug und Spannung der elastischen Spannelemente von der Wand des Fahrzeuges leicht abgezogen werden kann. Anstelle eines starren Bügels kann man an dieser Stelle jedoch auch einen Verbindungsstreifen aus elastischem Material, Kunststoff oder einem Gewebe vorsehen, der ebenfalls als Zuggriff zum Wegziehen der Stauhilfe von der jeweiligen Wand dienen kann.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: einen viereckigen Rahmen mit Eckteilen und Spannelementen, der als Stauhilfe in einem Kraftfahrzeug dienen kann,
- Figur 2: einen vergrößerten Ausschnitt der linken unteren Ecke der Figur 1 in Explosionsdarstellung und
- Figur 3: das Halteelement in einer Vorderansicht und einer Schnittansicht.

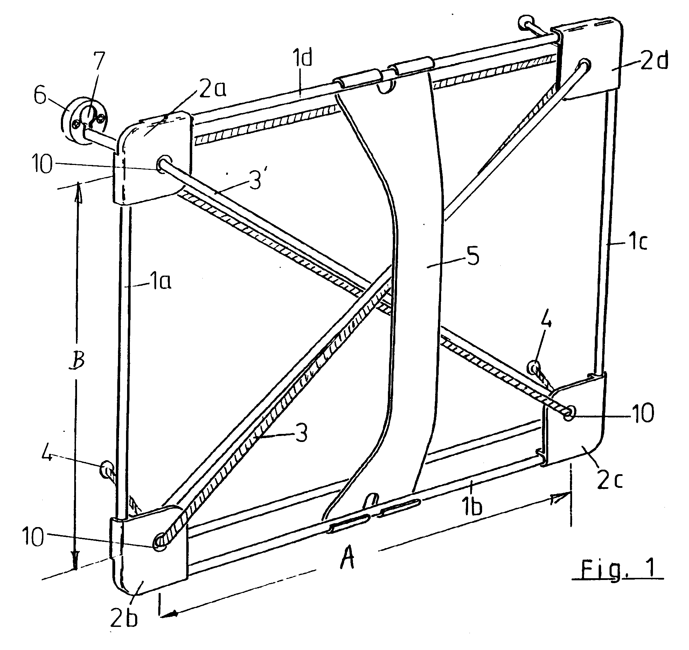

Man erkennt in Figur 1 in perspektivischer Ansicht vier Eckteile 2a, b, c, d, welche über Rahmenrohre 1a, b, c, d zu einem mehr oder weniger starren Rahmen miteinander verbunden sind. Die Rahmenrohre 1b und 1d sind obendrei noch über einen Griffbügel 5 miteinander verbunden, welcher aus der durch den Rahmen aufgespannten Ebene hervorsteht. Die einzelnen Rahmenrohre 1a, b, c, d können auch einstückig miteinander verbunden sein, z.B. aus einem längeren Rohr oder Rundstab in einem Stück durch Anbringen jeweils einer 90°-Krümmung in den Eckbereichen hergestellt werden.

Die Eckteile 2a, b, c, d sind im wesentlichen rechteckige Platten, weisen jedoch entlang zweier Seitenkanten sich quer zur Ebene der Platten erstreckende Stege auf, welche eine im Querschnitt im wesentlichen U-förmige Nut bilden und so die Rahmenrohre bzw. Rundstäbe 1a, b, c, d aufnehmen können. Zweckmäßigerweise sind die so gebildeten U-förmigen Nuten etwas hinterschnitten, so daß die Rohre oder Rundstäbe 1a, b, c, d mit mäßiger Kraft in die Nut eingedrückt werden können und in der Nut verrasten.

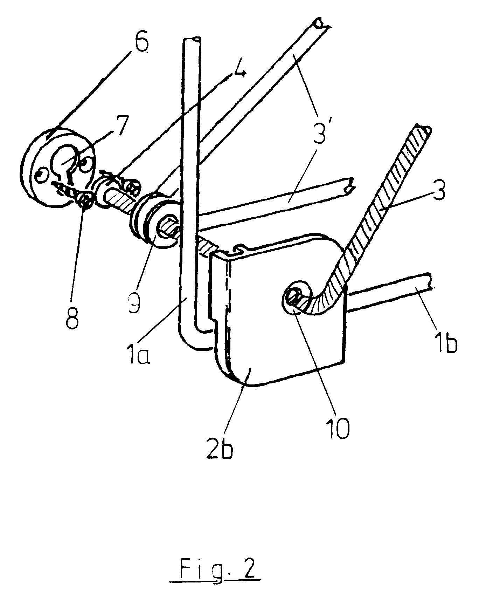

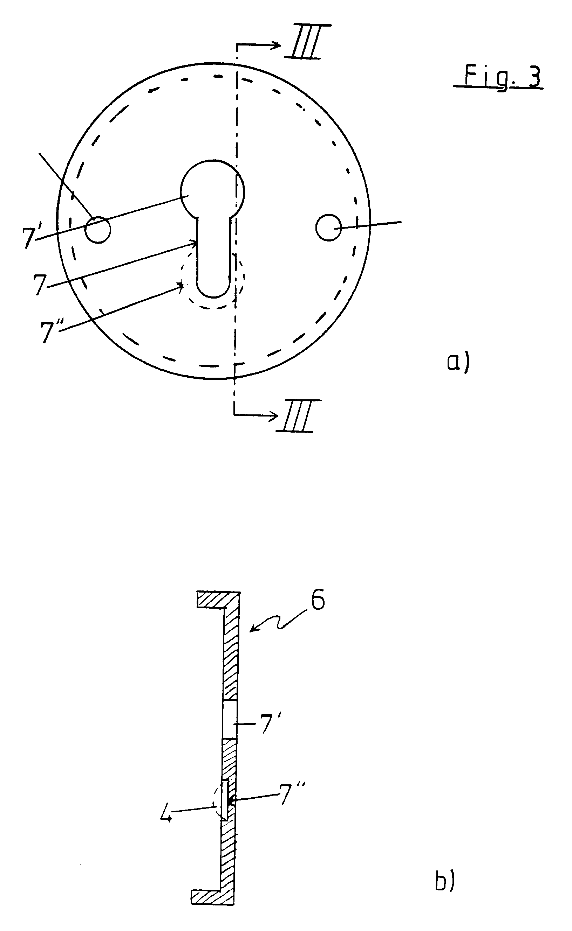

Oben links in Figur 1 ist ein Halteelement 6 dargestellt, welches im Zusammenhang mit Figur 3 noch genauer beschrieben wird. Den anderen vier Eckteilen 2b, c, d gegenüberliegend sind ebenfalls entsprechende Halteelemente 6 angeordnet, jedoch in Figur 1 nicht dargestellt. In Figur 2, die eine Explosionsdarstellung des linken unteren Eckbereiches des Rahmens aus Figur 1 ist, erkennt man, daß die Rahmenrohre bzw. Verbindungselemente 1a, 1b einstückig miteinander sind und über einen 90°-Bogen ineinanderübergehen. In Figur 2 erkennt man an der Rückseite des Eckteiles 2a die entlang der linken Seitenkante des Eckteiles a angeordneten Stege, die ein hinterschnittenes U-Profil bilden, so daß die Rohrabschnitte 1a, 1b in diese Nut eingedrückt werden können und darin verrasten. Es versteht sich, daß an der nicht sichtbaren Rückseite an der Unterkante des Eckteiles 2a entsprechende Stege unter Bildung einer hinterschnittenen Nut angeordnet sind, in welchen der Abschnitt 1b der Verbindungselemente bzw. Rahmenrohre aufgenommen werden kann.

Die Eckteile 2a können sowohl aus Metall hergestellt sein, können jedoch auch aus einem stabilen Kunststoff, z.B. Hart-PVC hergestellt sein. Jedes der Eckteile 2a, b, c, d weist etwa in der Mitte ein Durchgangsloch 10 mit gut gerundeten glatten Kanten auf. Wie man in Figur 2 am besten erkennt, erstreckt sich durch das Loch 10 ein im Querschnitt vorzugsweise rundes, elastisches Seil 3. Das freie Ende des Seiles 3 ist mit einem pilzförmigen Kopf 4 versehen, welcher zur Befestigung des Seiles in dem Halteelement 6 dient. Hierzu wird der pilzförmige Kopf 4 des Seilendes in die Erweiterung 7' eines Langloches 7 in dem Halteelement 6 eingeführt, anschließend nach unten geschoben, wobei das Seil 3 in dem schmaleren Langlochabschnitt 7 aufgenommen ist. Diese Position ist in Figur 1 an dem Halteelement links oben gut zu erkennen.

Konzentrisch zu dem Loch 10 ist auf der Rückseite des Eckteiles 2a und vorzugsweise an diesem noch eine Seilscheibe 9 drehbar gelagert, wobei diese Seilscheibe 9 auch eine axiale Bohrung aufweist, so daß das Seil 3 hindurchgeführt werden kann. Den Verlauf des Seiles 3 kann man am besten anhand der Figur 3 beschreiben und erkennen. Zur besseren Unterscheidung ist das Seil 3 mit einer Schraffur versehen, während das Seil 3' unschraffiert dargestellt ist. Ausgehend von dem unten links dargestellten Eckteil 2b, das auch in Figur 2 dargestellt ist, erkennt man, daß das Seil 3 mit seinem pilzförmigen Kopf 4 in dem Halteteil 6 verrastet werden kann. Von dort verläuft das Seil 3 durch die axiale Bohrung der Seilscheibe 9 und das konzentrisch hierzu angeordnete Führungsloch 10 des Eckteiles 2b. Von dort wird das Seil diagonal durch den aufgespannten Rahmen auf die in Figur 1 nicht sichtbare Rückseite des Eckteiles 2d geführt, verläuft dort um eine nicht sichtbare Seilscheibe 9 herum, die ebenso wie bei dem Eckteil 2b konzentrisch zu der Bohrung 10 des Eckteiles 2d angeordnet ist und von dort parallel zu dem Rahmenrohr bzw. Verbindungselement 1d zur Rückseite des Eckteiles 2a, und dort wiederum um eine in gleicher Weise wie bei den Eckteilen 2b, 2d angeordnete Seilscheibe 9 und diagonal bis zur Vorderseite des Eckteiles 2c, durch dessen Führungsloch 10 hindurch und zu einem der Rückseite des Eckteiles 2c gegenüberliegenden Halteelement 6, das in Figur 1 nicht dargestellt ist.

Gegebenenfalls wird das durch das Eckteil 2c hindurchgeführte Ende des Seiles 3 erst mit einem pilzförmigen Kopf 4 versehen, nachdem das Seil in der beschriebenen Weise an den Eckteilen des Rahmens entlanggeführt worden ist, insbesondere wenn die Bohrungen in der Seilscheibe und die Bohrung 10 in den Eckteilen zu klein sind, um die pilzförmigen Köpfe 4 hindurchzulassen. Diese pilzförmigen Köpfe können jedoch auch am Durchtritt durch die Seilscheibenbohrung und die Bohrung 10 gehindert werden, indem beispielsweise ein entsprechend enger Sicherungsring bzw. eine Sicherungsscheibe, die beispielsweise geschlitzt ist, zwischen den pilzförmigen Kopf 4 und die Seilscheibe 9 gelegt wird. Das Seil 3 sollte möglichst elastisch sein und seine Elastizität auch dauerhaft behalten und insbesondere sollte seine Länge so bemessen sein, daß die Eckteile 2a, b, c, d fest an die jeweils gegenüberliegenden Halteelemente 6 herangezogen werden, wenn keinerlei zu verstauende Teile zwischen dem aufgespannten Rahmen und der Wand angeordnet sind, an welchen die Halteelemente 6 befestigt sind. Dabei kann es sich um die Innenverkleidung von Türen oder Seitenwänden in einem Auto handeln, die Halteelemente können aber gegebenenfalls auch an der Rückwand von Sitzen oder der Innenverkleidung des Daches angeordnet sein.

Mit dem eben beschriebenen Verlauf sichert das mit einer Schraffur dargestellte elastische Seil 3 die beiden unteren Eckteile 2b, 2c an ihren jeweils gegenüberliegenden Halteelementen 6. Das unschraffiert dargestellte Seil 3' wird in völlig analoger Weise von den beiden oberen Eckteilen 2a bzw. 2d aus über die übrigen Eckteile 2b, 2c hinweg geführt. Beginnend beispielsweise bei dem Halteelement 6, welches dem Eckteil 2a gegenüberliegt, wird das Seil durch eine Seilscheibe 9, das Loch 10 im Eckteil 2a und diagonal zur Rückseite des Eckteiles 2c geführt, dort um eine weitere Seilscheibe 9 herumgelegt, die ebenso angeordnet ist, wie die Seilscheibe 9 des Eckteiles 2a in Figur 2. Vom Eckteil 2c verläuft dann das Seil 3' weiter zu dem eben erwähnten Eckteil 2b um dessen Seilscheibe 9 herum und wieder diagonal zur Vorderseite des Eckteiles 2d, durch dessen Loch 10 und die zentrale Bohrung der dort angeordneten Seilscheibe hindurch und zu dem gegenüberliegenden Halteelement 6. Jedes der Seile 3, 3' verläuft also zweimal diagonal und einmal parallel zu einer der längeren Seitenkanten des aufgespannten Rechteckrahmens. Vemachlässigt man die Längenabschnitte der Spannelemente bzw. Seile 3, 3', die sich von den Eckteilen 2a, 2b, 2c und 2d zu den jeweils gegenüberliegenden Halteelementen 6 erstrecken, so entspricht die Gesamtlänge jedes der Seile 3, 3' also dem Zweifachen einer Diagonalen zuzüglich einer Längskante des Rahmens. Die entsprechenden Rahmenmaße, jeweils bis zu den Löchern 10 bzw. dem Zentrum der Seilscheibe 9 gemessen, sind in Figur 1 mit A und B bezeichnet. Die Länge der Seile 3, 3' beträgt also zweimal √(a² + b²) + a. Auf diese Länge werden zweckmäßigerweise auch die fertigen, mit den pilzförmigen Köpfen 4 versehenen Seile 3, 3' eingestellt, so daß sie leicht gespannt sind, wenn der leere Rahmen bzw. die unbestückte Stauhilfe über die pilzförmigen Köpfe 4 der Seile 3, 3' an den Halteelementen 6 befestigt ist. Unter der Annahme, daß die elastischen Teile um maximal 100 % gedehnt werden können, kann der Rahmen bzw. die Stauhilfe von der Wand, an welcher sie befestigt ist, um einen lichten Abstand entfernt werden, der der Hälfte der maximalen Längung des Seiles entspricht, da entsprechende Seilabschnitte jeweils von zwei Eckteilen aus zwischen den Löchern 10 und den gegenüberliegenden Halteelementen 6 freigegeben werden müssen. Durch die Abstände A, B ausgedrüdkt beträgt also der maximale lichte Abstand der Stauhilfe von der Wand √(a² + b²) + a/2, also auf jeden Fall mehr als 1,5a.

Damit können auch relativ voluminöse Gegenstände, deren Tiefe größer ist als die Länge der Stauhilfe, zwischen dieser und dem jeweiligen Wandteil angeordnet und durch die Stauhilfe festgeklemmt bzw. gehalten werden.

Daneben kann es auch zweckmäßig sein, wenn zwischen den Rahmenteilen, d.h. entweder zwischen den Verbindungselementen 1a, b, c, d oder den Eckteilen 2a, b, c, d oder zwischen beiden ein Netz gespannt ist, das möglichst so angeordnet sein sollte, daß es den Verlauf und die Dehnung der Seile 3, 3' beim Abziehen der Stauhilfe von der gegenüberliegenden Wand nicht stört.

In Figur 3 erkennt man noch etwas genauer einige Einzelheiten des Halteelementes 6. Das Halteelement 6 ist ein kurzes hohlzylindrisches Teil mit einem Deckel an einer Stirnseite, der ein Langloch 7 aufweist. Dieses Langloch 7 hat an seinem oberen Ende eine Erweiterung 7' von im wesentlichen kreisförmigem Querschnitt, die so bemessen ist, daß der pilzförmige Kopf 4 an den Enden der Seile 3, 3' gerade durch diese Erweiterung 7' hindurchpaßt. Der schmalere Abschnitt des Langloches 7 ist dagegen gerade so bemessen, daß das Seil 3, 3' mit seinem ganzen Durchmesser ohne weiteres darin aufnehmbar ist, der pilzförmige Kopf 4 jedoch nicht durch diesen schmaleren Bereich hindurchpaßt. Von der Rückseite der das Langloch 7 aufweisenden Deckscheibe her ist im Bereich des unteren Endes des Langloches 7 eine Einsenkung 7'' vorgesehen, die im Durchmesser etwa dem Durchmesser der Erweiterung 7' entspricht. Nachdem der pilzförmige Kopf durch die Erweiterung 7' hindurchgeführt ist und sich auf der Rückseite des Zylinderdeckels des Halteelementes 6 befindet, kann das Seil in dem Langloch 7 von der Erweiterung 7' weggeführt werden, bis aufgrund der elastischen Spannung des Seiles der pilzförmige Kopf in die Einsenkung 7'' hineinrutscht, so daß der pilzförmige Kopf nicht ohne weiteres wieder nach oben in den Bereich der Erweiterung 7' geschoben werden kann, solange sich das Seil 3, 3' unter Spannung befindet. Zum Lösen muß also ein kurzer Seilabschnitt ergriffen und in das Langloch 7 hineingeschoben werden, damit der pilzförmige Kopf 4 aus der in Figur 3a gestrichelt angedeuteten Verrastung befreit wird. Die Halteelemente 6 weisen jeweils zwei Bohrungen 11 zur Aufnahme von Befestigungsschrauben 8 auf.

Im Normalbetrieb brauchtjedoch die Stauhilfe nicht aus dem Fahrzeug entfernt zu werden, da sie relativ flach gebaut ist und dicht an der Wand des Fahrzeuges anliegt, wenn keine Gegenstände dahinter verstaut sind. Typische Werte für die in Figur 1 angegebenen Maße A und B liegen im Bereich zwischen 20 und 50 cm, wobei selbstverständlich auch Abweichungen von diesem bevorzugten Werteberelch möglich sind. Mit A = 40cm und B = etwa 30cm kann man problemlos z.B. Warndreieck und Verbandskasten hinter einer solchen Stauhilfe rutschfest und platzsparend unterbringen. Wie bereits erwähnt, brauchen die Maße der Stauhilfe jedoch nicht durch die Eckteile festgelegtzu werden, vielmehr können mehr oderweniger beliebig geformte Verbindungselemente die Eckteile im wesentlichen starr miteinander verbinden, untereinander verbunden sein und/oder die Eckteile in beliebigen Richtungen, vor allem in der durch den Polygonzug der Eckteile aufgespannten Ebene, überragen.

### Bezugszeichenliste

- 1a,b,c,d: Rahmenrohre
- 2a,b,c,d: Eckteile
- 3, 3': Seil
- 4: Kopf
- 5: Griffbügel
- 6: Halteelement
- 7: Langloch
- 7': Erweiterung
- 7'': Einsenkung
- 8: Befestigungsschrauben
- 9: Seilscheibe
- 10: Bohrung, Durchgangsloch
- 11: Bohrungen

## Patentansprüche

1. Stauhilfe mit elastischen Spannelementen (3, 3') für den Innenraum von Kraftfahrzeugen, mit Eckteilen (2a, b, c, d), die ein Polygon aufspannen und durch mindestens im Gebrauch starre Verbindungselemente (1a, b, c, d) miteinander verbunden sind, wobei sich mindestens von einigen der Eckteile (2a, b, c, d) aus elastische Spannelemente erstrecken und mit je einem dieser sich von diesem Eckteil (2a - d) wegerstreckenden Spannelemente an einer Wand im Inneren des Fahrzeuges befestigbar sind, dadurch gekennzeichnet, daß die Spannelemente als Spannseile (3, 3') ausgebildet sind, die sich von jeweils einer ihrer Befestigungsstellen an einer Wand im Inneren des Fahrzeuges jeweils durch ein zugehöriges Eckteil (z.B. 2a) hindurch und mindestens bis zu einem weiteren Eckteil (z.B. 2c) und durch dieses hindurch zu einer anderen der Befestigungsstellen erstrecken.

2. Stauhilfe nach Anspruch 1, dadurch gekennzeichnet, daß die Eckteile (2a - d) von den Verbindungselementen (1a - d) getrennt herstellbar und mit diesen fest verbunden sind.

3. Stauhilfe nach Anspruch 2, dadurch gekennzeichnet, daß die Eckteile (2a - d) und die Verbindungselemente (1a - d) lösbar miteinander verbunden sind.

4. Stauhilfe nach einem der Ansprüche 1 bis 3, dadurch gekennzeichnet, daß die elastischen Spannseile (3, 3') sich jeweils durch ein zugehöriges Eckteil (z.B. 2a) hindurch und bis zu einem weiteren, diagonal bezüglich des erstgenannten gelegenen, Eckteil (z.B. 2c) erstrecken.

5. Stauhilfe nach einem der Ansprüche 1 bis 4, dadurch gekennzeichnet, daß die Verbindungselemente (1a - d) so verstellbar sind, daß der Abstand zwischen den durch die Verbindungselemente verbundenen Eckteilen (2a - d) variierbar ist.

6. Stauhilfe nach einem der Ansprüche 1 bis 5, dadurch gekennzeichnet, daß die freien Enden der elastischen Spannelemente (3, 3') jeweils mit einem Befestigungsteil versehen sind.

7. Stauhilfe nach Anspruch 6, dadurch gekennzeichnet, daß am Ende der elastischen Spannelemente (3, 3') jeweils ein pilzförmiger Kopf vorgesehen ist.

8. Stauhilfe nach einem der Ansprüche 1 bis 7, dadurch gekennzeichnet, daß Halteelemente (6) für die Spannelemente (3, 3') an einer Innenwand eines Kraftfahrzeuges befestigbar sind.

9. Stauhilfe nach Anspruch 6 und 7, dadurch gekennzeichnet, daß die Halteelemente ein Langloch mit einer Erweiterung aufweisen, durch welche der pilzförmige Kopf (4) am Ende eines Spannelementes (3, 3') hindurchtreten kann, während der pilzförmige Kopf (4) in dem schmaleren Bereich des Langloches zurückgehalten wird.

10. Stauhilfe nach einem der Ansprüche 1 bis 9, dadurch gekennzeichnet, daß die Spannelemente (3, 3') jeweils als Seil ausgebildet sind.

11. Stauhilfe nach einem der Ansprüche 1 bis 10, dadurch gekennzeichnet, daß die Eckteile (2a - d) jeweils mindestens ein Durchgangsloch (10) zur Hindurchführung eines Spannelementes (3, 3') aufweisen.

12. Stauhilfe nach einem der Ansprüche 1 bis 11, dadurch gekennzeichnet, daß die Eckteile und die Verbindungselemente einen Rahmen aufspannen, der mindestens dreieckig, vorzugsweise vieredkig ist.

13. Stauhilfe nach Anspruch 12, wobei der Rahmen viereckig ist, dadurch gekennzeichnet, daß ein erstes elastisches Spannelement (3) von einem Befestigungspunkt an der Innenwand des Kraftfahrzeuges durch ein erstes Eckteil (2b) hindurchgeführt ist, von dort zu dem diagonal gegenüberliegenden dritten Eckteil (2d) verläuft, parallel zu einer Seitenkante des Rechtecks zu einem vierten Eckteil (2a) und von dort diagonal zu einem zweiten Eckteil (2c) verläuft, durch dieses hindurchgeführt und mit dem verbleibenden freien Ende an dem dem zweiten Eckteil (2b) gegenüberliegenden Halteelement (6) befestigt ist, während das zweite Spannelement von einem Halteelement (6) ausgehend, zunächst durch das vierte Eckteil (2a), von dort zum diagonal gegenüberliegenden zweiten Eckteil (2c), von dort parallel zu einer Seitenkante des Rechteckes zum ersten Eckteil (2b) und von diesem wiederum diagonal zum dritten Eckteil (2d) verläuft, durch dieses hindurchgeführt ist und an dem dem dritten Eckteil (2d) gegenüberliegenden Halteelement (6) befestigt ist.

14. Stauhilfe nach einem der Ansprüche 1 bis 13, dadurch gekennzeichnet, daß zwei beabstandet voneinander verlaufende Verbindungselemente (1a - d) durch einen als Griff dienenden Bügel (5) oder Streifen miteinander verbunden sind.

15. Stauhilfe nach Anspruch 13, dadurch gekennzeichnet, daß an den Eckteilen (2a - d) für die Umlenkung der Spannelemente zu anderen Eckteilen (2a - d) Riemenscheiben (9) vorgesehen sind.

16. Stauhilfe nach einem der Ansprüche 1 bis 15, dadurch gekennzeichnet, daß die Eckteile im wesentlichen plattenförmig sind und zwei kreisbogenförmig umgebördelte Kanten zur Aufnahme von Rundstäben oder Rundrohren als Verbindungselemente (1a - d) aufweisen.

17. Stauhilfe nach einem der Ansprüche 1 bis 16, dadurch gekennzeichnet, daß in den Eckteilen ein Seilspeicher vorgesehen ist.

## Claims

1. A stowage accessory having elastic clamping elements (3, 3') for the interior of motor vehicles, and corner portions (2a, b, c, d) which define a polygon and which are connected together by connecting elements (1a, b, c, d) which are rigid at least in use, wherein elastic clamping elements extend fro at least see of the corner portions (2a, b, c, d) and can be fixed with a respective one of said clamping elements extending away from said corner pertion (2a - d) to a wall in the interior of the vehicle, characterised in that the clamping elements are in the form of clamping cables (3, 3') which each extend from a respective one of their fixing locations to a wall in the interior of the vehicle through a respective associated corner portion (for example 2a) and at least to a further corner portion (for example 2c) and through see to another of the fixing locations.

2. A stowage accessory according to claim 1 characterised in that the corner pertions (2a - d) can be produced separately from the connecting elements (1a - d) and fixedly connected thereto.

3. A stowage accessory according to claim 2 characterised in that the corner portions (2a - d) and the connecting elements (1a - d) are releasably connected together.

4. A stowage accessory according to one of claims 1 to 3 characterised in that the elastic clamping cables (3, 3') respectively extend through an associated corner portion (for example 2a) and to a further corner portion (for example 2c) which is disposed diagonally with respect to the first-mentioned corner portion.

5. A stowage accessory according to one of claims 1 to 4 characterised in that the connecting elements (1a - d) are so displaceable that the spacing between the corner portions (2a - d) connected by the connecting elements is variable.

6. A stowage accessory according to one of claims 1 to 5 characterised in that the free ends of the elastic clamping elements (3, 3') are each provided with a respective fixing portion.

7. A stowage accessory according to claim 6 characterised in that a mushroom-shaped head is provided at the end of each of the elastic clamping elements (3, 3').

8. A stowage accessory according to one of claims 1 to 7 characterised in that holding elements (6) for the clamping elements (3, 3') can be fixed to an inside wall of a motor vehicle.

9. A stowage accessory according to claim 6 and claim 7 characterised in that the holding elements have a slot with an enlargement through which the mushroom-shaped head (4) at the end of a clamping element (3, 3') can pass while the mushroom-shaped head (4) is retained in the narrower region of the slot.

10. A stowage accessory according to one of claims 1 to 9 characterised in that the clamping elements (3, 3') are each in the form of a cable.

11. A stowage accessory according to one of claims 1 to 10 characterised in that the corner portions (2a - d) each have at least one through hole (10) for a clamping element (3, 3') to be passed therethrough.

12. A stowage accessory according to one of claims 1 to 11 characterised in that the corner portions and the connecting elements define a free which is at least triangular and preferably quadrangular.

13. A stowage accessory according to claim 12 wherein the frame is quadrangular characterised in that a first elastic clamping element (3) is passed from a fixing point on the inside wall of the motor vehicle through a first corner portion (2b), passes from there to the diagonally oppositely disposed third corner portion (2d), extends parallel to a side edge of the rectangle to a fourth corner portion (2a) and from there diagonally to a second corner portion (2c), is passed through same and fixed with the remaining free end to the holding element (6) which is disposed opposite the second corner portion (2b), while the second clamping element, starting from a holding element (6), firstly extends through the fourth corner portion (2a), from there to the diagonally oppositely disposed second corner portion (2c), from there parallel to a side edge of the rectangular to the first corner portion (2b) and from same again diagonally to the third corner portion (2d), is passed through same and is fixed to the holding element (6) disposed opposite the third corner portion (2d).

14. A stowage accessory according to one of claims 1 to 13 characterised in that two connecting elements (1a - d) extending at a spacing from each other are connected together by a strip or bar (5) serving as a handle.

15. A stowage accessory according to claim 13 characterised in that belt pulleys (9) are provided at the corner portions (2a - d) for deflecting the clamping elements to other corner portions (2a - d).

16. A stowage accessory according to one of claims 1 to 15 characterised in that the corner portions are substantially plate-shaped and have two edges which are flanged over in an arcuate configuration for receiving round bars or round tubes as connecting elements (1a - d).

17. A stowage accessory according to one of claims 1 to 16 characterised in that a cable storage means is provided in the corner portions.

## Revendications

1. Auxiliaire d'arrimage, comportant des éléments tendeurs élastiques (3, 3'), pour le compartiment intérieur de véhicules à moteur, comportant des cornières (2a, b, c, d) formant un polygone, et assemblées les unes aux autres par des éléments d'assemblage (1a, b, c, d), rigides au moins en cours d'utilisation, où des éléments tendeurs élastiques s'étendent au moins à partir de quelques-unes des cornières (2a, b, c, d) et, chacune par l'un des éléments tendeurs partant de cette cornière (2a-d), peuvent être fixées à une paroi du compartiment intérieur du véhicule, caractérisé en ce que les éléments tendeurs sont conçus comme des câbles tendeurs (3, 3'), dont chacun s'étend, à partir de l'un de ses points de fixation contre une paroi du compartiment intérieur du véhicule, en passant par une cornière correspondante (par exemple 2a), et au moins jusqu'à une autre cornière (par exemple 2c), en traversant cette dernière jusqu'à un autre des points de fixation.

2. Auxiliaire d'arrimage selon la revendication 1, caractérisé en ce que les cornières (2a-d) peuvent être fabriquées séparément des éléments d'assemblage (1a-d), et sont assemblées à demeure à ces derniers.

3. Auxiliaire d'arrimage selon la revendication 2, caractérisé en ce que les cornières (2a-d) et les éléments d'assemblage (1a-d) sont assemblés les uns aux autres d'une manière amovible.

4. Auxiliaire d'arrimage selon l'une des revendications 1 à 3, caractérisé en ce que chacun des câbles tendeurs élastiques (3, 3') passe par une cornière correspondante (par exemple 2a), et s'étend jusqu'à une autre cornière (par exemple 2c), se trouvant en un point diagonalement opposé à la première mentionnée ci-dessus.

5. Auxiliaire d'arrimage selon l'une des revendications 1 à 4, caractérisé en ce que les éléments d'assemblage (1a-d) peuvent être réglés de façon à faire varier la distance entre les cornières (2a-d) assemblées par les éléments d'assemblage.

6. Auxiliaire d'arrimage selon l'une des revendications 1 à 5, caractérisé en ce que chacune des extrémités libres des éléments tendeurs élastiques (3, 3') est pourvu d'une pièce de fixation.

7. Auxiliaire d'arrimage selon la revendication 6, caractérisé en ce qu'on prévoit un bouton en forme de champignon à chacune des extrémités des éléments tendeurs élastiques (3, 3').

8. Auxiliaire d'arrimage selon l'une des revendications 1 à 7, caractérisé en ce que des éléments d'arrêt (6), destinés aux éléments tendeurs (3, 3'), peuvent être fixés à une paroi intérieure d'un véhicule.

9. Auxiliaire d'arrimage selon les revendications 6 et 7, caractérisé en ce que les éléments d'arrêt comportent un trou longitudinal avec un élargissement, qui peut être traversé par le bouton (4) en forme de champignon à l'extrémité d'un élément tendeur (3, 3'), tandis que le bouton (4) en forme de champignon est retenu dans la zone la plus étroite du trou longitudinal.

10. Auxiliaire d'arrimage selon l'une des revendications 1 à 9, caractérisé en ce que chacun des éléments tendeurs (3, 3') est conçu comme un câble.

11. Auxiliaire d'arrimage selon l'une des revendications 1 à 10, caractérisé en ce que chacune des cornières (2a-d) comporte un trou de passage (10) destiné à faire passer un élément tendeur (3, 3').

12. Auxiliaire d'arrimage selon l'une des revendications 1 à 11, caractérisé en ce que les cornières et les éléments de raccordement forment un cadre au moins triangulaire, de préférence quadrangulaire.

13. Auxiliaire d'arrimage selon la revendication 12, dans lequel le cadre est quadrangulaire, caractérisé en ce qu'un premier élément tendeur élastique (3) est guidé, à partir d'un point de fixation sur la paroi intérieure du véhicule, de façon à passer par une première cornière (2b), puis, de là, court jusqu'à la troisième cornière (2d), diagonalement opposée, puis court parallèlement à une arête latérale du rectangle pour arriver à une quatrième cornière (2a), et, de là, diagonalement jusqu'à une deuxième cornière (2c), traverse cette dernière et, par son extrémité libre restante, est fixé à l'élément d'arrêt (6) opposé à la deuxième cornière (2b), tandis que le deuxième élément tendeur part d'un élément d'arrêt (6), passe d'abord par la quatrième cornière (2a), puis de là va vers la deuxième cornière (2c), diagonalement opposée, puis de là s'étend parallèlement jusqu'à une arête latérale du rectangle pour arriver à la première cornière (2b), et de là court de nouveau diagonalement jusqu'à la troisième cornière (2d), passe par cette dernière et est fixé à l'élément d'arrêt (6), opposé à la troisième cornière (2d).

14. Auxiliaire d'arrimage selon l'une des revendications 1 à 13, caractérisé en ce que deux éléments d'assemblage (1a-d), courant à distance l'un de l'autre, sont reliés l'un à l'autre par un étrier (5) ou une bande, servant de poignée.

15. Auxiliaire d'arrimage selon la revendication 13, caractérisé en ce qu'on prévoit des poulies (9), au niveau des cornières (2a-d), pour renvoyer les éléments tendeurs aux autres cornières (2a-d).

16. Auxiliaire d'arrimage selon l'une des revendications 1 à 15, caractérisé en ce que les cornières ont essentiellement la forme de plaques, et comportent deux arêtes à bords rabattus en arc de cercle, destinées à loger des barres rondes ou des tubes ronds servant d'éléments d'assemblage (1a-d).

17. Auxiliaire d'arrimage selon l'une des revendications 1 à 16, caractérisé en ce qu'on prévoit un magasin de câble dans les cornières.
